**Europäisches Patentamt**

(19) **European Patent Office**

**Office européen des brevets**

(11) Veröffentlichungsnummer: **0 090 389**

**B1**

(12) # EUROPÄISCHE PATENTSCHRIFT

(45) Veröffentlichungstag der Patentschrift:
26.11.86

(51) Int. Cl.⁴: **C 02 F 3/28**

(21) Anmeldenummer: **83103035.8**

(22) Anmeldetag: **26.03.83**

(54) **Vorrichtung zur anaeroben Vergärung organischen Materials.**

(30) Priorität: **31.03.82 DE 3211888**

(43) Veröffentlichungstag der Anmeldung:
**05.10.83 Patentblatt 83/40**

(45) Bekanntmachung des Hinweises auf die Patenterteilung:
**26.11.86 Patentblatt 86/48**

(84) Benannte Vertragsstaaten:
**AT BE CH DE FR GB IT LI NL SE**

(56) Entgegenhaltungen:
**BE-A-508 013**
**DE-A-1 584 907**
**DE-A-1 922 800**
**DE-A-2 830 990**
**DE-A-2 839 861**
**DE-B-1 048 239**
**DE-B-1 055 457**
**DE-C-640 200**
**FR-A-2 455 629**

(73) Patentinhaber: **BSA Maschinenfabrik Paul G. Langer GmbH, Bernecker Strasse 20, D-8581 Marktschorgast (DE)**

(72) Erfinder: **Der Erfinder hat auf seine Nennung verzichtet**

(74) Vertreter: **Rau, Manfred, Dr. Dipl.- Ing., Rau & Schneck, Patentanwälte Königstrasse 2, D-8500 Nürnberg 1 (DE)**

LIBER, STOCKHOLM 1986

## Beschreibung

Die Erfindung betrifft eine Vorrichtung nach dem Oberbegriff von Anspruch 1.

Die bekannten derartigen, auch als Biogasreaktoren bezeichneten Vorrichtungen sind so ausgelegt, daß sie etwa zu 90 % mit zu vergärendem organischem Material, insbesondere mit Gülle, gefüllt werden, wobei der verbleibende Reaktorraum dann zur Aufnahme des bei der Reaktion entstehenden Gases dient und mit entsprechenden Sicherheitsvorrichtungen bzw. Vorrichtungen zur Entnahme des Gases ausgestattet ist. An diesen notwendigerweise erforderlichen Gasraum werden von der Konstruktion und vom Werkstoff her hohe Anforderungen gestellt, da er einerseits gasdicht sein muß und zum anderen, vor allem wegen der Schwefelwasserstoffanteile der entstehenden Gase, eine hohe Korrosionsfestigkeit aufweisen muß. Da die Wandung des Gasraumes praktisch einstückig mit der Wandung des das zu vergärende Material aufnehmenden übrigen Behälters ist, muß der Gesamtbehälter aus aufwendigem Material, z.B. Edelstahl, hergestellt bzw. entsprechende Verkleidungen oder Beschichtungen müssen aufgebracht werden. Die Gefahr einer Korrosion besteht vor allem bei unbehandelten Stahltanks, während bei Betonbehältern die Schwierigkeit besteht, die erforderliche Gasdichtigkeit zu erreichen, wobei sich insbesondere die Verbindungsstellen der Betonteile untereinander und zu Teilen aus anderem Material als problematisch erweisen. Das Vorsehen eines Gasraumes über die gesamte Behälteroberfläche bedingt zudem, daß der Behälter im Hinblick auf die tatsächlich einbringbare Materialfüllung überdimensioniert werden muß und auch hierdurch die spezifischen Kosten bezogen auf den nutzbaren Raum verhältnismäßig hoch sind.

Es kommt hinzu, daß bei den bekannten Vorrichtungen an der Oberfläche des meist unterschiedliche Konsistenz aufweisenden Materials sich Schwimmdecken ausbilden. Diese Schwimmdecken lassen sich häufig nicht oder nur mit erheblichem Aufwand bekämpfen. Man ist deshalb teilweise dazu übergegangen, um bei hohem Feststoffanteil die negativen Auswirkungen einer zu starken Schwimmschichtenbildung zu reduzieren, mit längeren Verweildauern zu arbeiten. Da aber die Gasausbeute mit zunehmender Betriebszeit stark abnimmt, ergibt sich ein ungünstiges Verhältnis zwischen der aufzuwendenden Prozeßenergie und der erzielten Gasmehrproduktion.

Für die Erzielung einer möglichst großen Ausbeute hat es sich als günstig erwiesen, daß das Frischmaterial vor dem Eintritt in den eigentlichen Gärraum auf die gewünschte Prozeßtemperatur gebracht wird. Dies wird herkömmlicherweise durch eine externe Vorheizung erreicht, welche jedoch mit einem geringen Wirkungsgrad arbeitet. Darüber hinaus ist es bekannt, in der Mitte des Behälters ein verhältnismäßig großvolumiges Rohr anzuordnen. Dies ist allerdings kostenaufwendig und wirkt einer Homogenisierung des Materials entgegen.

Gattungsgemäße Vorrichtungen sind aus der FR-A-2455 629 und insbesondere aus der DE-A-2 839 861 bekannt. Die Behälter dieser Vorrichtungen weisen zwar jeweils mehr oder weniger nahe an der Behälteroberkante liegende Überlaufleitungen auf, jedoch verbleibt im Flüssigkeitsbehälter selbst noch ein nicht unbeachtlicher Gasraum, welcher eine gasdichte Abdichtung des gesamten Behälters erforderlich macht und eine große, freie Flüssigkeitsoberfläche bedingt, bei welcher eine sich ausbildende Schwimmschicht jedenfalls nur schwer zu entfernen bzw. zu unterbinden ist. Hiervon ausgehend liegt der Erfindung die Aufgabe zugrunde, eine Vorrichtung zur anaeroben Vergärung so auszubilden, daß der Aufwand an kostenintensiven Bauteilen gering gehalten wird und die Herstellung preisgünstig erfolgen kann, daß die Bildung von Schwimmschichten weitgehend unterbunden wird bzw. leicht zu bekämpfen ist, und daß besonders günstige Reaktionsbedingungen geschaffen werden.

Diese Aufgabe wird gelöst durch eine Vorrichtung nach dem Oberbegriff von Anspruch 1, welche sich durch die Merkmale des kennzeichnenden Teils von Anspruch 1 auszeichnet. Durch eine erfindungsgemäß angeordnete und ausgebildete Gashaube wird es möglich, den Behälter voll mit zu vergärendem Material zu füllen. Hierdurch braucht der Behälter nicht mehr in seiner Gesamtheit gasdicht, sondern lediglich nur flüssigkeitsdicht zu sein. Dies ermöglicht die Verwendung weniger hochwertiger Materialien für den großvolumigen Behälter und reduziert deren Einsatz auf die verhältnismäßig kleine Gashaube, so daß z. B. der Behälter aus Beton oder Stahl und die Gashaube aus Edelstahl hergestellt werden können.

Im Gegensatz zu bekannten Vorrichtungen wird damit ein Kosten-Nutzen-Verhältnis erreicht, durch welches Biogasreaktoren für einen großen Kreis insbesondere landwirtschaftlicher Betriebe interessant werden. Einem vertretbaren Investitionsaufwand stehen damit nämlich die Vorteile gegenüber, daß Gas zur Energieversorgung gewonnen wird, und daß andererseits die vor allem bei Großviehhaltungen in großen Mengen anfallende, als Ausgangsmaterial dienende Gülle direkt verwertet und das verbleibende Reaktionsprodukt zur Düngung nicht nur während der vegetativen Ruhezeit ausgebracht werden kann, was eine höhere Effektivität der Düngung bedeutet.

Die erfindungsgemäß erzielbare sehr geringe Oberfläche an zu verarbeitendem Material, welche praktisch der Querschnittsfläche der Gashaube entspricht (im Gegensatz zur Querschnittsfläche des gesamten Behälters bei vorbekannten Einrichtungen) macht eine leichte und effektive Bekämpfung der Schwimmschichten- und Krustenbildung möglich. Darüber hinaus kann durch das Zuführen einer kleineren Menge Materials der Materialspiegel so angehoben werden, daß sich gegebenenfalls im Überlaufrohr ausbildende Verstopfungen durch den Überdruck freigemacht werden können. Schließlich ermöglicht es das Vorsehen einer Gashaube noch, eine Vorkammer zur Vorheizung des zu verarbeitenden Materials in den Behälter zu integrieren und eine günstige Überleitung von Material aus der Vorkammer in den eigentlichen Behälter zu ermöglichen. Weiterhin ist es möglich, daß weitgehend unabhängig von den zugeführten Mengen an Frischmaterial ein gleichbleibend hoher, den Behälter voll ausfüllender Materialstand gewährleistet ist.

Vor allem aber ist erfindungsgemäß sichergestellt, daß lediglich der Gasdom mit agressiven Gasen in Berührung kommt, so daß nur für diesen ein entsprechend beständiges, feneres Material verwendet werden muß.

Die nach Anspruch 2 in der Gashaube vorgesehene Füllstandsüberwachungseinrichtung stellt sicher, daß dann, wenn die Überlaufleitung trotz eines ansteigenden Flüssigkeitsspiegels verstopft bleibt, Bedienungspersonal alarmiert bzw. selbsttätig die Zufuhr frischen Materials unterbunden wird.

Das gemäß Anspruch 3 vorgesehene Rührwerk verhindert die Bildung von Schwimmschichten und das Austrocknen der Oberfläche. Dabei ist das Rührwerk vorteilhafterweise an der Gashaube selbst angebracht.

Die sich bei der erfindungsgemäßen Vorrichtung ohne zusätzliche Maßnahmen allenfalls ausbildende sehr kleine Schwimmschicht kann durch die nach Anspruch 4 vorgesehene verschließbare seitliche Ausnehmung in Verbindung mit der unter der Schwimmschicht zu schließenden Klappe leicht beseitigt werden, was sich insbesondere dann als Vorteil erweist, wenn der Feststoffanteil des verarbeiteten Materials relativ hoch ist.

Durch die Ausgestaltung nach Anspruch 5 wird die durch die erfindungsgemäße Gashaube gegebene Möglichkeit verwirklicht, konstruktiv besonders einfach eine mit einem hohen Wirkungsgrad zu betreibende Vorkammer zum Vorwärmen des frisch zugeführten Materials zu schaffen.

Eine gemäß Anspruch 6 vorgesehene Klappe sorgt dafür, daß das Material aus der Vorkammer, welches dort zweckmäßigerweise auf einem höheren Füllniveau als im Behälter gehalten wird, so über die Trennwand auf die Oberfläche des Materials im Behälter unter Ausnutzung einer Art Düsenwirkung gespritzt wird, daß auch hierdurch eine Benetzung der Materialoberfläche im Behälter und die Verhinderung der Ausbildung einer Trockenkruste erreicht wird.

Durch die geneigte Anordnung des Behälters nach Anspruch 7 sind geringfügige Schwankungen des Materialniveaus unproblematisch, da sichergestellt ist, daß der Behälter stets voll ausgefüllt ist.

Die Konstruktion nach Anspruch 8 ermöglicht eine vorteilhafte Vorwärmung des Frischmaterials.

Durch die Ausgestaltung nach Anspruch 9 wird erreicht, daß durch das austretende Frischmaterial sich möglicherweise ausbildende Bodenschichten aufgewirbelt werden.

Mittels des Gegenstrom-Heizmantels nach Anspruch 10 läßt sich eine zusätzliche Aufheizung des Frischmaterials erzielen, was besonders günstig in Kombination mit den Merkmalen nach Anspruch 12 realisiert werden kann.

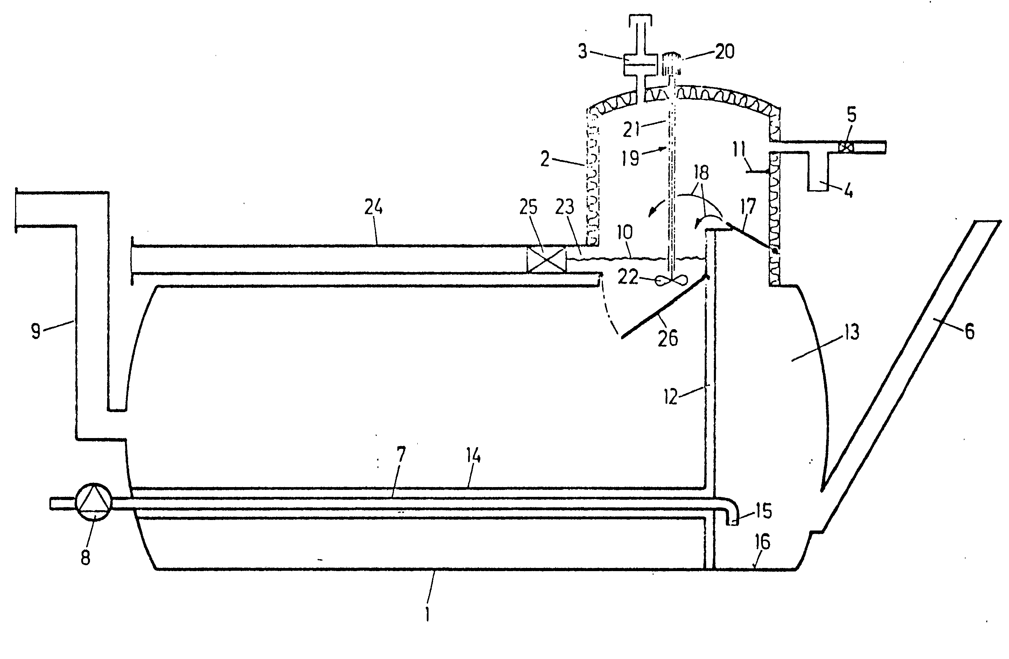

Weitere Merkmale, Vorteile und Einzelheiten der Erfindung ergeben sich aus der folgenden Beschreibung eines bevorzugten Ausführungsbeispiels anhand der Zeichnung. Diese zeigt einen schematischen Schnitt durch eine erfindungsgemäße Vorrichtung.

Die Erfindung umfaßt einen eine zylinderförmige Grundform aufweisenden Behälter 1 aus Stahl, auf welchen oben an einem Ende eine zylinderförmige, oben geschlossene Gashaube 2 aufgesetzt ist. In der Zeichnung sind die Größenverhältnisse von Behälter 1 und Gashaube 2 der besseren Übersicht halber nicht maßstabsgerecht wiedergegeben.

Die Gashaube 2 ist aus korrosionsfestem Edelstahl hergestellt und mit an sich bekannten Einrichtungen, wie einer Über- und Unterdrucksicherung 3, einer Kondensatabscheideeinrichtung 4 und einer Flammenrückschlageinrichtung 5 versehen, welche nur schematisch dargestellt sind. An der Gashaube ebenfalls vorgesehene, an sich bekannte Einrichtungen zur gasdichten Volumenanpassung sind der Übersichtlichkeit halber nicht näher dargestellt.

Der Behälter ist mit einem Zulaufrohr 6 für den freien Zulauf frischen Materials und mit einem Zulaufrohr 7 miteiner Pumpe 8 für den geförderten Zulauf versehen. Darüber hinaus weist er eine Überlaufleitung 9 auf, welche zu einem nicht dargestellten Speicherbehälter führt. Die Überlaufleitung ist relativ zum Behälter 1 so angeordnet, daß sich ein Materialniveau derart einstellt, daß die Oberfläche 10 oberhalb des Behälters 1 in der Gashaube 2 liegt, so daß also der Behälter 1 vollständig gefüllt ist. Eine an der Gashaube 2 angeordnete Füllstandsüberwachungseinrichtung 11 gibt ein Alarmsignal ab, wenn die Oberfläche des zu vergärenden Materials über die hierdurch vorgegebene Marke ansteigt.

Unterhalb der Gashaube 2 ist im Behälter eine vertikale, diesen unterteilende Trennwand 12 angeordnet. Durch die Trennwand 12 wird eine Vorkammer 13 in den Behälter integriert, in welche die Zulaufrohre 6 und 7 münden. Das Zulaufrohr 7 ist, wie in der Zeichnung nur ganz schematisch angedeutet, mit einem Gegenstromheizmantel 14 versehen, welcher in Verbindung mit der heizkörperartig ausgebildeten Trennwand 12 steht. Die Zu- und Ablaufleitungen sind der Übersichtlichkeit halber nicht dargestellt. Durch diese Konstruktion kann in der Vorkammer 13 eine Vorwärmung des frisch zugeführten Materials vorgenommen werden. Dadurch daß die Auslaßöffnung 15 des Zulaufrohres 7 auf den Behälterboden 16 gerichtet ist, wird durch das eingepumpte Material eine sich möglicherweise ausbildende Bodenschicht aufgewirbelt.

An der Oberseite der Vorkammer 13 ist eine Art Klappe 17 angeordnet, welche eine Art Düsenwirkung ausübt, so daß das Material aus der Vorratskammer aus einem höheren Niveau, wie durch die Pfeile 18 angedeutet, auf die Oberfläche 10 des Materials im Behälter 1 gespritzt wird, wodurch ein Austrocknen und eine Krustenbildung vermieden wird. Wenn das Frischmaterial nicht durch Pumpen über erhöhten Druck in die Vorkammer 13 eingebracht wird, sondern selbsttätig zufließt, so daß praktisch lediglich ein Überlauf von der Vorkammer 13 in den Behälter 1 stattfindet, kann im Bereich der Oberfläche 10 ein Verteilteller angeordnet werden, welcher für eine gleichmäßige Benetzung sorgt.

Zusätzlich kann zur Vermeidung der Ausbildung einer Schwimmschicht unterhalb der Oberfläche 10 ein Rührwerk 19 umfassend einen Antriebsmotor 20, eine Welle 21 und einen Propeller 22 vorgesehen sein.

Bei einem sehr hohen Feststoffgehalt, bei welchem sich trotz der vorgenannten Maßnahmen eine unerwünschte Schwimmschicht ausbilden kann, gestattet eine seitlich an der Gashaube 2 angebrachte Ausnehmung 23, an welche sich ein Arbeitskanal 24 und eine Verschlußeinrichtung 25 anschließen, einen problemlosen Eingriff und ein Entfernen der Schwimmschicht. Damit eine möglichst vollständige Entfernung der Feststoffe möglich wird, kann zum Entfernen der Schwimmschicht eine seitlich an der Oberseite des Behälters 1 schwenkbar angeordnete Klappe 26 nach oben geschwenkt werden. Die Klappe ist dabei so ausgebildet, daß sie am Propeller 22 des Rührwerks vorbeibewegt werden kann, was in der Zeichnung jedoch im einzelnen nicht dargestellt ist.

Zwischen dem Füllstandsniveau unterhalb der Gashaube 2 und demjenigen im Bereich der Zulaufleitung 6 besteht ein Höhenunterschied, welcher dem Gasdruck in der Gashaube 2 proportional ist.

**Patentansprüche**

1. Vorrichtung zur anaeroben Vergärung organischen Materials in einem Behälter (1) mit an dessen Oberseite angeordneten Einrichtungen zur Entnahme von bei der Vergärung erzeugten Gasen umfassend eine eine relativ zur maximalen Behälterquerschnittsfläche erheblich geringere Querschnittsfläche aufweisende, mit Gasentnahme- und Kontrolleinrichtungen versehene, sich nach oben über die Behälteroberseite erstreckende Gashaube (2), wobei der Behälter eine Überlaufleitung aufweist, dadurch gekennzeichnet, daß die Überlaufkante der Überlaufleitung (9) oberhalb der Behälteroberkante derart angeordnet ist, daß im Betrieb die Flüssigkeit den Faulraum völlig füllt und die Oberfläche des zu vergärenden Materials sich bis in den unteren Bereich der Gashaube (2) erstreckt.

2. Vorrichtung nach einem der Patentansprüch 1 gekennzeichnet durch eine in der Gashaube (2) angeordnete Füllstandarsüberwachungseinrichtung (11).

3. Vorrichtung nach einem der Patentansprüche 1 oder 2 gekennzeichnet durch ein im Bereich der Gashaube (2) angeordnetes Rührwerk (19).

4. Vorrichtung nach einem der Patentansprüche 1 bis 3 dadurch gekennzeichnet, daß die Gashaube (2) seitlich eine verschließbare Ausnehmung (23) zum Schwimmschichtenabzug oberhalb einer in eine horizontale Schließlage verschwenkbaren Klappe (26) aufweist.

5. Vorrichtung nach einem der Patentansprüche 1 bis 4 gekennzeichnet durch eine unterhalb der Gashaube (2) angeordnete, in diese ragende vertikale Behältertrennwand (12), durch welche eine das frisch zugeführte Material aufnehmende Vorkammer (13) ausgebildet wird.

6. Vorrichtung nach Patentanspruch 5, gekennzeichnet durch eine die Vorkammer (13) abdeckende, zur Gashaube (2) öffnende Klappe (17).

7. Vorrichtung nach einem der Patentansprüche 1 bis 6 dadurch gekennzeichnet, daß der Behälter (1) als mit der Längsachse zur Horizontalen derart geneigt einbaubarer, an einem Ende die Gashaube (2) aufweisender Zylinderkörper ausgebildet ist, daß das Ende mit der Gashaube (2) in der Gebrauchslage tiefer liegt.

8. Vorrichtung nach einem der Patentansprüche 1 bis 7, dadurch gekennzeichnet, daß das Zuführrohr (7) für das Frischmaterial den Behälter (1) in Längsrichtung durchsetzt.

9. Vorrichtung nach einem der Patentansprüche 1 bis 8 dadurch gekennzeichnet, daß das Zuführrohr (7) für das Frischmaterial eine zum Behälterboden (16) gerichtete Auslaßöffnung (15) aufweist.

10. Vorrichtung nach einem der Patentansprüche 1 bis 9 dadurch gekennzeichnet, daß das Zuführrohr (7) mit einem Gegenstrom-Heizmantel (14) umgeben ist.

11. Vorrichtung nach Patentanspruch 5 und 10, dadurch gekennzeichnet, daß die Trennwand (12) heizkörperartig ausgebildet und mit dem Heizmantel (14) des Zuführrohres verbunden ist.

## Claims

1. Apparatus for the anaerobic fermentation of organic material in a tank (1) having devices arranged on its top surface for the extraction of gases generated during fermentation, comprising a gas vent (2) which has a considerably smaller cross-sectional area relative to the maximum cross-sectional area of the tank, is provided with gas extractors and monitors and which extends upwardly above the top surface of the tank, the tank having an overflow pipe, characterised in that the overflow edge of the overflow pipe (9) is arranged above the upper edge of the tank in such a manner that during operation the liquid completely fills the fermentation chamber and the surface of the material to be fermented extends as far as into the lower region of the gas vent (2).

2. Apparatus according to Claim 1, characterised by a level monitoring device (11) arranged in the gas vent (2).

3. Apparatus according to any one of Claims 1 or 2, characterised by an agitator (19) arranged in the area of the gas vent (2).

4. Apparatus according to any one of Claims 1 to 3, characterised in that the gas vent (2) has on its side a sealable recess (23) for removing the floating layer above a flap (26) which can be pivoted into a horizontal closed position.

5. Apparatus according to any one of Claims 1 to 5, characterised by a vertical dividing tank wall (12) which is arranged below the gas vent (2) and projects into the latter and by which an antechamber (13) for receiving the newly fed material is formed.

6. Apparatus according to Claim 5, characterised by a flap (17) which covers the antechamber (13) and opens towards the gas vent (2).

7. Apparatus according to any one of Claims 1 to 6, characterised in that the tank (I) is in the form of a cylindrical body which has the gas vent at one end and which can be installed with the longitudinal axis inclined to the horizontal in such a manner that the end with the gas vent (2) is lower when in the position of use.

8. Apparatus according to any one of Claims 1 to 7, characterised in that the pipe (7) for feeding the fresh material extends through the tank (I) in the longitudinal direction.

9. Apparatus according to any one of Claims 1 to 8, characterised in that the pipe (7) for feeding the fresh material has an outlet opening (15) directed towards the tank bottom (16).

10. Apparatus according to any one of Claims 1 to 9, characterised in that the feed pipe (7) is surrounded by a counterflow heating jacket (14).

11. Apparatus according to Claims 5 and 10, characterised in that the dividing wall (12) is designed in the form of a heat radiator and connected to the heating jacket (14) of the feed pipe.

## Revendications

1°. Dispositif pour la fermentation anaérobie de matières organiques dans un réservoir (1) avec des installations disposées à la partie supérieure de celui-ci pour le prélèvement des gaz produits lors de la fermentation, comprenant un dôme à gaz (2) qui présente une section de surface considérablement plus faible que la surface maximale de la section du réservoir, qui est muni d'appareils de prélèvement de gaz et de contrôle et qui s'étend vers le haut au-dessus de la partie supérieure du réservoir, le réservoir comportant une conduite de trop-plein, caractérisé en ce que le bord de déversement de la conduite de trop-plein (9) est disposé au-dessus du bord supérieur du réservoir, de manière qu'en fonctionnement le liquide remplisse complètement la chambre de putréfaction et que la surface des matières devant fermenter s'étende jusque dans la région inférieure du dôme à gaz (2).

2°. Dispositif selon la revendication 1, caractérisé par un appareil de contrôle de niveau de remplissage (11) disposé dans le dôme à gaz (2).

3°. Dispositif selon l'une des revendications 1 ou 2, caractérisé par un agitateur mécanique (19) disposé dans la zone du dôme à gaz (2).

4°. Dispositif selon l'une des revendications 1 à 3, caractérisé en ce que le dôme à gaz (2) présente sur le côté un évidement (23) pouvant être fermé pour l'extraction de la couche flottante au-dessus d'un volet pivotant (26) dans une position de fermeture horizontale.

5°. Dispositif selon l'une des revendications 1 à 4, caractérisé par une paroi de séparation de réservoir (12) verticale disposée au-dessous du dôme à gaz (2) et s'avançant dans celui-ci, paroi par laquelle est formée une chambre avancée (13) recevant la matière nouvellement amenée.

6°. Dispositif selon la revendication 5, caractérisé par un volet (17) recouvrant la chambre avancée (13) et s'ouvrant vers le dôme à gaz (2).

7°. Dispositif selon l'une des revendications 1 à 6, caractérisé en ce que le réservoir (1) est réalisé sous forme de corps cylindrique pouvant être monté avec son axe incliné sur l'horizontale, et comportant le dôme à gaz (2) à une extrémité, de manière que l'extrémité comportant le dôme à gaz (2) soit plus basse dans la position d'utilisation.

8°. Dispositif selon l'une des revendications 1 à 7, caractérisé en ce que le tube d'amenée (7) de matière nouvelle traverse le réservoir (1) en direction longitudinale.

9°. Dispositif selon l'une des revendications 1 à 8, caractérisé en ce que le tube d'amenée (7) de matière nouvelle présente une ouverture de sortie (15) dirigée vers le fond (16) du réservoir.

10°. Dispositif selon l'une quelconque des revendications 1 à 9, caractérisé en ce que le tube d'amenée (7) est entouré pour une enveloppe (14) de chauffage à contre-courant.

11°. Dispositif selon les revendications 5 et 10, caractérisé en ce que la paroi de séparation (12) est réalisée comme un corps de chauffage et est reliée à l'enveloppe de chauffage (14) du tube d'amenée.